(19) Europäisches Patentamt

European Patent Office

Office européen des brevets

(11) **EP 1 028 140 B1**

(12) **EUROPÄISCHE PATENTSCHRIFT**

(45) Veröffentlichungstag und Bekanntmachung des Hinweises auf die Patenterteilung:
**26.03.2003  Patentblatt 2003/13**

(51) Int Cl.$^7$: **C08K 3/38**, C08J 3/12

(21) Anmeldenummer: **99124887.3**

(22) Anmeldetag: **16.12.1999**

(54) **Siliconkautschuk**

Silicone rubber

Caoutchouc de polasiloxane

(84) Benannte Vertragsstaaten:
**DE ES FR GB IT**

(30) Priorität: **04.02.1999  DE 19904510**

(43) Veröffentlichungstag der Anmeldung:
**16.08.2000  Patentblatt 2000/33**

(73) Patentinhaber: **Wacker-Chemie GmbH**
**81737 München (DE)**

(72) Erfinder:
- **Wolfer, Dietrich, Dr.**
  **5110 Oberndorf (AT)**
- **Marsch, Wilhelm**
  **84533 Haiming (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
GB-A- 2 045 791    US-A- 3 722 240
US-A- 4 172 871

- PATENT ABSTRACTS OF JAPAN vol. 1997, no. 10, 31. Oktober 1997 (1997-10-31) & JP 09 143370 A (TORAY DOW CORNING SILICONE CO LTD), 3. Juni 1997 (1997-06-03)
- PATENT ABSTRACTS OF JAPAN vol. 1995, no. 11, 26. Dezember 1995 (1995-12-26) & JP 07 207161 A (TOSHIBA SILICONE CO LTD), 8. August 1995 (1995-08-08)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Zusammensetzung sowie ein Verfahren zur Herstellung der Zusammensetzung und ein Granulat, das diese Zusammensetzung enthält und ein Verfahren zur Herstellung des Granulats.

Siliconkautschuk in Form von Granulat bereitzustellen ist schon lange ein Bedürfnis, da dieses z.B. für automatisierte Extrusion oder Spritzguß von Bedeutung ist. Ein Problem ist, daß unbehandelter Siliconkautschuk sich nicht granulieren läßt, da er nur die Lochplatte oder das Messer verschmiert.

In US 4,172,871 wird die Herstellung von Pellets aus Siliconkautschuk beschrieben, wobei die Siliconkautschukpellets unbehandelt aneinander kleben. Dieses Problem wird in dieser Druckschrift dadurch gelöst, daß die Pellets z.B. mit Glimmer oder Talk beschichtet werden.

Aufgabe der Erfindung ist es den Stand der Technik zu verbessern und insbesondere ein gut rieselfähiges Granulat zur Verfügung zu stellen, das nicht mit unter Umständen störenden Stoffen Oberflächen-behandelt wurde.

Die Aufgabe wird durch die Erfindung gelöst.

Gegenstand der Erfindung ist eine Zusammensetzung, die auf der Basis von zumindest einem Polyorganosiloxan, Borsäure, Fettsäuresalz und Wasser herstellbar ist.

Die Polyorganosiloxane sind vorzugsweise lineare Polyorganosiloxane, wie Dimethylpolysiloxane, Phenylmethylpolysiloxane, Tri-Fluorpropylpolysiloxane, Ethylpropylpolysiloxane. Sie weisen eine Viskosität von 10.000 mPa.s bis $9 \times 10^6$ mPa.s bevorzugt von 100.000 mPa.s bis $8 \times 10^6$ mPa.s und besonders bevorzugt von $6 \times 10^6$ mPa.s bis $8 \times 10^6$ mPa.s auf. Die Polyorganosiloxane sind in der Zusammensetzung in Mengen von vorzugsweise 30 bis 90 Gew.%, besonders bevorzugt 40 bis 80 Gew.%, ganz besonders bevorzugt 60 bis 70 Gew.% enthalten.

Borsäure ist in der Zusammensetzung in Mengen von vorzugsweise 2 bis 20 Gew.%, besonders bevorzugt 3 bis 14 Gew.%, ganz besonders bevorzugt 8 bis 9 Gew.% enthalten.

Bei den Fettsäuresalzen handelt es sich vorzugsweise um die Salze der Metalle Al, Ba, Ca, Cd, Co, Cr, Cu, Fe, Li, Mg, Mn, Ni, Pb, Sn, Sr, Zn mit höheren Fett-, Harz- u. Naphthensäuren, wie Stearate, Palmitate, Oleate, Linoleate, Resinate, Laurate, Octanoate, Ricinoleate, 12-Hydroxystearate, Naphthenate, Tallate und dergleichen. Bevorzugt sind Fettsäuren mit mehr als 12 Kohlenstoffatomen bis 30 Kohlenstoffatomen, besonders bevorzugt sind Fettsäuren mit mehr als 16 Kohlenstoffatomen bis 26 Kohlenstoffatomen, wobei die Stearate besonders bevorzugt sind, insbesondere Calciumstearat. Fettsäuresalze sind in der Zusammensetzung in Mengen von vorzugsweise 1 bis 10 Gew.%, besonders bevorzugt 2 bis 6 Gew.%, ganz besonders bevorzugt 3 bis 4 Gew.% enthalten.

Ein weiterer Gegenstand der Erfindung ist ein Verfahren zur Herstellung der erfindungsgemäßen Zusammensetzung, wobei die Komponenten Polyorganosiloxan, Borsäure, Fettsäuresalz und Wasser vermischt werden.

Dabei werden die oben erwähnten Komponenten Polyorganosiloxan, Borsäure und vorzugsweise voll entsalztes Wasser und pyrogen in der Gasphase erzeugtem Siliciumdioxid mit einer Oberfläche von 150 bis 300 g/m$^2$, oder gefällte Kieselsäure in einer Menge von vorzugsweise 8 bis 60 Gew.%, bevorzugt 15 bis 50 Gew.%, besonders bevorzugt 25 bis 40 Gew.% enthalten ist, und Felbäresalz vermischt. Vorzugsweise 2 bis 4 Stunden bei einer Temperatur von vorzugsweise 120 bis 190 Grad, vorzugsweise unter Stickstoffatmosphäre geknetet, wobei das als Lösungsmittel für die Borsäure dienende Wasser als Dampf abgezogen wird.

Diese so hergestellte Zusammensetzung dient als Additiv für die Herstellung eines Granulates aus Siliconkautschuk, wobei der Siliconkautschuk peroxidisch vernetzender oder Additionsvernetzender Siliconkautschuk sein kann. Dieses Additiv ermöglichte es überraschender Weise, ein voll rieselfähiges Siliconkautschukgranulat herzustellen. Diese Additive werden in Mengen von vorzugsweise 0,1 bis 4 Gew.%, besonders bevorzugt 0,4 bis 2 Gew.%, ganz besonders bevorzugt 0,8 bis 1,2 Gew.% dem Siliconkautschuk zugesetzt.

Der erfindungsgemäße Siliconkautschuk ist vorzugsweise eine peroxidisch vernetzende Polyorganosiloxanmasse die vorzugsweise folgende Komponenten enthält.

Polyorganosiloxane aus Einheiten der allgemeinen Formel

$$\frac{R_r SiO_{4-r}}{2}$$

(I),

worin

R gleich oder verschieden sein kann und gegebenenfalls substituierter Kohlenwasserstoffrest bedeutet.
r 0, 1, 2 oder 3 ist und einen durchschnittlichen Zahlenwert von 1,9 bis 2,1 hat,

Beispiele für Kohlenwasserstoffreste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Biphenyl-, Naphtyl- und Anthryl-und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste R sind halogenierte Alkylreste, wie der 3-Chlorpropyl-, der 3/3,3-Trifluorpropyl- und der Perfluorhexylethylrest, halogenierte Arylreste, wie der p-Chlorphenyl- und der p-Chlorbenzylrest.

Bevorzugt handelt es sich bei Rest R um Wasserstoffatom- und Kohlenwasserstoffreste mit 1 bis 8 Kohlenstoffatomen, besonders bevorzugt um den Methylrest.

Weitere Beispiele für Reste R sind der Vinyl-, Allyl-, Methallyl-, 1-Propenyl-, 1-Butenyl-, 1-Pentenylrest, 5-Hexenyl- , Butadienyl-, Hexadienyl-, Cyclopentenyl-, Cyclopentadienyl-, Cyclohexenyl-, Ethinyl-, Propargyl- und 1-Propinylrest.

Bevorzugt handelt es sich bei Rest R um Alkenylreste mit 2 bis 8 Kohlenstoffatomen, besonders bevorzugt um den Vinylrest.

Bei gegebenenfalls substituierten Kohlenwasserstoffresten mit 1 bis 8 Kohlenstoffatomen sind der Methyl-, Vinyl-, Phenyl- und 3,3,3-Trifluorpropylrest besonders bevorzugt.

Vorzugsweise sind an mindestens 70 Mol% der in dem Polyorganosiloxan (A) aus Einheiten der Formel (I) enthaltenen Si-Atome Alkylreste, insbesondere Methylreste, gebunden. Enthalten die Polyorganosiloxane neben Si-gebundenen Methylund/oder 3,3,3-Trifluorpropylresten noch Si-gebundene Vinylund/oder Phenylreste, so handelt es sich bei letzteren bevorzugt um Mengen von 0,001 - 30 Mol%.

Vorzugsweise bestehen die Polyorganosiloxane (A) überwiegend aus Diorganosiloxaneinheiten. Die Endgruppen der Polyorganosiloxane können Trialkylsiloxygruppen, insbesondere der Trimethylsiloxyrest oder der Dimethylvinylsiloxyrest, sein; es können aber auch ein oder mehrere dieser Alkylgruppen durch Hydroxygruppen oder Alkoxygruppen, wie Methoxy- oder Ethoxyreste, ersetzt sein.

Bei den Polyorganosiloxanen (A) kann es sich um Flüssigkeiten oder hochviskose Substanzen handeln. Vorzugsweise weisen die Polyorganosiloxane (A) bei 25°C eine Viskosität zwischen $10^3$ und $10^8$ mPA.s auf.

Es kann eine Art von Polyorganoosiloxan (A), es kann auch ein Gemisch aus mindestens zwei verschiedenen Arten von Polyorganosiloxan (A) eingesetzt werden.

Vorzugsweise werden als Vernetzer bei den erfindungsgemäßen Siliconkautschukmassen Peroxide, wie Dibenzoylperoxid, Bis-(2,4-dichlorbenzoyl)-peroxid, Dicumylperoxid und 2,5-Bis-(tert.-butylperoxy)-2,5-dimethylhexan sowie deren Gemische eingesetzt, wobei Bis-(2,4-dichlorbenzoyl)-peroxid und 2,5-Bis-(tert.-butylperoxy)-2,5-dimethylhexan bevorzugt sind.

Des weiteren wird als Vernetzer vorzugsweise ein Gemisch aus Bis - 4 - Methylbenzoylperoxid - (= PMBP) und 2,5-Dimethylhexan - 2,5 - di-tertiär-butylperoxid (=DHBP) im Verhältnis 1 : 0,4 bis 0,5 : 1, bevorzugt im Verhältnis 1:0,4 verwendet.

Des weiteren enthalten die erfindungsgemäßen Polyorganosiloxane (A) vorzugsweise verstärkende und/oder nichtverstärkende Füllstoffe.

Beispiele für verstärkende Füllstoffe sind pyrogene oder gefällte Kieselsäuren mit BET-Oberflächen von mindestens 50 m$^2$/g.

Die genannten Kieselsäurefüllstoffe können hydrophilen Charakter haben oder nach bekannten Verfahren hydrophobiert sein. Hierzu sei beispielsweise auf DE 38 39 900 A (Wacker-Chemie GmbH; angemeldet am 25.11.1988) bzw. die entsprechende US-A 5,057,151 verwiesen. Im allgemeinen erfolgt dann die Hydrophobierung mit 1 bis 20 Gew.-% Hexamethyldisilazan und/oder Divinyltetramethyldisilazan und 0,5 bis 5 Gew.-% Wasser, jeweils bezogen auf das Gesamtgewicht der Polyorganosiloxanmasse, wobei diese Reagenzien vorteilhafterweise in einer geeigneten Mischvorrichtung, wie z.B. Kneter oder Innenmischer, zum bereits vorgelegten Polyorganosiloxan (A) gegeben werden, bevor die hydrophile Kieselsäure sukzessiv in die Masse eingearbeitet wird.

Beispiele für nichtverstärkende Füllstoffe sind Quarzmehl, Diatomeenerde, Calciumsilikat, Zirkoniumsilicat, Zeolithe, Metalloxidpulver, wie Aluminium-, Titan-, Eisen- oder Zinkoxid, Bariumsilikat, Bariumsulfat, Calciumcarbonat, Gips, Polytetrafluorethylenpulver. Des weiteren können als Füllstoffe faserige Komponenten, wie Glasfasern und Kunststoffasern, eingesetzt werden. Die BET-Oberfläche dieser Füllstoffe liegt vorzugsweise unter 50 m$^2$/g.

Die erfindungsgemäßen, zu Elastomeren vernetzbaren Polyorganosiloxanmassen enthalten Füllstoff (B) in Mengen von vorzugsweise 1 bis 200 Gewichtsteilen, besonders bevorzugt 30 bis 100 Gewichtsteilen, jeweils bezogen auf 100 Gewichtsteile Polyorganosiloxan (A).

Der jeweiligen Anwendung entsprechend können den erfindungsgemäßen zu Elastomeren vulkanisierbaren Polyorganosiloxanmassen Additive (C), wie beispielsweise Verarbeitungshilfsmittel, wie etwa Weichmacher, Pigmente und Stabilisatoren, wie etwa Hitzestabilisatoren, zugesetzt werden.

Beispiele für Weichmacher, die als Additive (C) eingesetzt werden können, sind mit Trimethylsilylgruppen und Hydroxygruppen terminierte Polydimethylsiloxane mit einer Viskosität von maximal 1000 mm$^2$/s bei 25°C oder auch Diphenylsilandiol.

Beispiele für Hitzestabilisatoren, die als Additive (C) eingesetzt werden können, sind Übergangsmetallfettsäuresalze, wie Eisen- oder Ceroctoat, Titanbythylat, Übergangsmetallsilanolate, wie Eisensilanolat, sowie Cer(IV)-Verbindungen, oder Oxide wie z. B. Eisen bzw. Titanoxid und deren Gemische.

Darüber hinaus enthalten die erfindungsgemäßen Massen vorzugsweise keine weiteren Stoffe.

Bei den jeweiligen zur Herstellung der erfindungsgemäßen Massen eingesetzten Komponenten kann es sich jeweils um eine einzelne Art einer solchen Komponente, wie auch um ein Gemisch aus mindestens zwei verschiedenen Arten einer solchen Komponente handeln.

Zu diesem peroxidischvernetzten Siliconkautschuk wird das erfindungsgemäße Additiv in Mengen von vorzugsweise 0,1 bis 4 Gew.%, besonders bevorzugt 0,4 bis 2 Gew.%, ganz besonders bevorzugt 0,8 bis 1,2 Gew.% zugesetzt. Anschließend wird mit üblichen Granuliermitteln wie z. B. der Lochplatte und dem routierenden Messer granuliert und es wird ein voll rieselfähiges Granulat erhalten.

Der Siliconkautschuk ist vorzugsweise auch eine additionsvernetzende Polyorganosiloxanmasse. Bis auf den peroxidischen Vernetzer können alle Substanzen wie oben auch bei den additionsvernetzenden Polyorganosiloxanmassen verwendet werden. Zusätzlich sind bei den Polyorganosiloxankautschukmassen, die durch Hydrosilylierung in der Wärme zu Elastomeren aushärten, sowohl Si-gebundene Wasserstoffatome aufweisende Polyorganosiloxane (D) als auch Hydrosilylierungskatalysatoren (E) enthalten.

Wenn die Polyorganosiloxankautschukmassen durch Hydrosilylierung in der Wärme zu Elastomeren aushärten enthalten die Massen sowohl Si-gebundene Wasserstoffatome aufweisende Polyorganosiloxane (D) als auch Hydrosilylierungskatalysatoren (E).

Als Vernetzer können Si-gebundene Wasserstoffatome aufweisende Polyorganosiloxane (D) verwendet werden. Die Polyorganosiloxane (D) können linear, cyclisch oder verzweigt sein. Vorzugsweise enthalten die Polyorganosiloxane (D) mindestens 3 Si-gebundene Wasserstoffatome.

Als Polyorganosiloxane (D) werden vorzugsweise Polyorganosiloxane der allgemeinen Formel (II)

$$H_g R^2_{3-g} SiO(SiR^2_2 O)_k (SiR^2 HO)_l SiR^2_{3-g} H_g \qquad (II),$$

eingesetzt, wobei

$R^2$ die Bedeutungen von R,
g die Werte 0 oder 1 und
k und 1 jeweils den Wert 0 oder eine ganze Zahl von 1 bis 100 bedeuten.

Beispiele und bevorzugte Beispiele für die Reste $R^2$ sind vorstehend bei den Beispielen für die Reste R aufgeführt. Vorzugsweise sind die Reste $R^2$ gesättigte Alkylreste oder Phenylreste.

Vorzugsweise bedeuten k und l jeweils Werte 0 oder eine ganze Zahl von 1 bis 50. Vorzugsweise beträgt die Summe aus k und l Werte von 1 bis 50, insbesondere von 1 bis 20.

Beispiele für Polyorganosiloxane (D) sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxanund Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxanund/oder Phenylmethylsiloxaneinheiten.

Polyorganosiloxan (D) wird vorzugsweise in Mengen von 0,5 bis 6, bevorzugt 1 bis 3, besonders bevorzugt 1,5 bis 2,5 Grammatom Si-gebundenen Wasserstoffs je Mol ethylenisch ungesättigte Bindung in den Resten $R^1$ des Polyorganosiloxans (A) eingesetzt.

Als Hydrosilylierungskatalysator (E) können prinzipiell alle üblicherweise in additionsvernetzenden Siliconkautschukmassen eingesetzten Katalysatoren verwendet werden. Hierzu zählen die Elemente und Verbindungen von Platin, Rhodium, Palladium, Ruthenium und Iridium, vorzugsweise Platin. Die Übergangsmetalle können gegebenenfalls auf feinteiligen Trägermaterialien, wie Aktivkohle, Metalloxiden, wie Aluminiumoxid oder pyrogen hergestelltem Siliciumdioxid fixiert sein.

Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln $(PtCl_2 \cdot Olefin)_2$ und $H(PtCl_3 \cdot Olefin)$ verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel $(PtCl_2 \cdot C_3H_6)_2$, die Umsetzungsprodukte von Hexachloroplatinsäure mit Alkoholen, Ethern und Aldehyden bzw. Mischungen derselben oder das Umsetzungsprodukt von. Hexachloroplatinsäure mit Methylvinylcyclotetrasiloxan in Gegenwart von Natriumbikarbonat in ethanolischer Lösung. Fein verteiltes Platin auf Trägermaterialien wie Siliciumdioxid, Aluminiumoxid oder aktivierter Holz- bzw. Tierkohle, Platinhalogenide wie $PtCl_4$, Hexachloroplatinsäure und $Na_2PtCl_4 \cdot nH_2O$, Platin-Olefin Komplexe, z.B. solche mit Ethylen, Propylen oder Butadien, Platin-Alkohol Komplexe, Platin-Styrol Komplexe wie in U.S. 4 394 317 beschrieben, Platin-Alkoholat Komplexe, Platin-Acetylacetonate, Reaktionsprodukte aus Chloroplatinsäure und Monoketonen, z.B. Cyclohexanon, Methylethylketon, Aceton, Methyl-n-propylketon, Diisobutylketon, Acetophenon und Mesityloxid, als auch Platin-Vinylsiloxan Komplexe - die Platin-Vinylsiloxan Komplexe wurden z.B. in U.S. 3 715 334, 3 775 452 und 3 814 730 beschrieben-, wie Platin-divinyltetramethyldisiloxan Komplexe mit oder ohne nachweisbaren Mengen an anorganischem Halogen, in einer Menge, die ausreicht, um das Härten der Zusammensetzung bei einer Temperatur von Umgebungstemperatur bis 250°C zu fördern; wobei das Organohydrogensiloxan und der Hydrosilylierungskatalysator in verschiedenen Teilen der mehrteiligen härtbaren Zusammensetzung angeordnet sind, ist bevorzugt. Besonders bevorzugt sind Komplexe des Platins mit Vinylsiloxanen, wie sym-Divinyltetramethyldisiloxan.

Der Hydrosilylierungskatalysator (IV) kann auch in mikroverkapselter Form eingesetzt werden, wobei der den Katalysator enthaltende und im Polyorganosiloxan unlösliche feinteilige Feststoff beispielsweise ein Thermoplast (Polyesterharze, Siliconharze) ist. Der Hydrosilylierungskatalysator kann auch in Form einer Einschlußverbindung, beispielsweise in einem Cyclodextrin, eingesetzt werden.

Die Menge des eingesetzten Hydrosilylierungskatalysators richtet sich nach der gewünschten Vernetzungsgeschwindigkeit sowie ökonomischen Gesichtspunkten. Bei Verwendung gebräuchlicher Platin-Katalysatoren liegt der Gehalt von Platin-Metall in der härtbaren Siliconkautschukmasse im Bereich von 0,1 bis 500 Gew.-ppm (ppm = Teile pro 1 Million Teile), vorzugsweise zwischen 10 und 100 Gew.-ppm Platin-Metall. Ansonsten wird der Katalysator gegebenenfalls zusammen mit einem Inhibitor vorzugsweise in Mengen von 0,01 bis 5 Gew.% eingesetzt.

Eine bevorzugte Herstellung eines additionsvernetzenden HTV-Siliconkautschuks erfolgt wie folgt:

75 Teile eines durch Trimethylsiloxygruppen entblockierten DiPolyorganosiloxan aus 99,7 Mol% Dimethylsiloxaneinheiten und 0,3 Mol% Vinylmethylsiloxaneinheiten mit einer Viskosität von $8 \times 10^6$ mPa.s bei 25 °C sowie 25 Teile eines durch Trimethylsiloxygruppen entblockierten DiPolyorganosiloxans aus 99,4 Mol% Dimethylsiloxaneinheiten und 0,6 Mol% Vinylmethylsiloxaneinheiten mit einer Viskosität von $8 \times 10^6$ mPa.s bei 25 °C werden in einem bei 150 °C betriebenen.Kneter mit 45 Teilen Pyrogen in der Gasphase erzeugtem Siliciumdioxid mit einer BET-Oberfläche von $300$ $m^2$ pro/g und 7 Teilen eines in den endständigen Einheiten je eine Si-gebundene Hydroxylgruppe aufweisenden Dimethylpolysiloxan mit einer Viskosität von 40 mPa.s bei 25 °C vermischt und 2 Stunden lang geknetet. Nach abkühlen der Mischung auf Raumtemperatur werden 5 Gewichts-ppm. Platin in Form einer 1-%igen Lösung von Hexachloroplatinsäure in Isopropanol und 0,2 Gew.-ppm Benzotriazol, wobei sich die Gew.-ppm jeweils auf das gesamte Gewicht der oben beschriebenen Mischung beziehen, zugemischt. Dann wird ein Teil eines durch Trimethylsiloxygruppen endblockierten Methylhydrogenpolysiloxan mit einer Viskosität von 20 mPa.s bei 25 °C zu der Mischung zugegeben.

Zu den additionsvernetzenden Siliconkautschuken wird das erfindungsgemäße Additiv in Mengen von vorzugsweise 0,1 bis 4 Gew.%, besonders bevorzugt 0,4 bis 2 Gew.%, ganz besonders bevorzugt 0,8 bis 1,2 Gew.% zugesetzt. Anschließend wird mit üblichen Granuliermitteln wie der Lochplatte und einem routierenden Messer granuliert und es wird ein voll rieselfähiges Granulat erhalten.

Der Vorteil des erfindungsgemäßen Additivs ist, daß erstmals ohne Zusatz von pyrogenem Siliciumdioxid ein voll rieselfähiges Granulat erhalten wurde. Dieser Zusatz von pyrogenem Siliciumdioxid erfolgte, um die an sich klebrigen Siliconkautschuke weniger klebrig zu machen. Da es in diesem Fall innerhalb weniger Stunden zu einer totalen Verstrammung des Kautschuks kommt, beträgt die Lagerstabilität derartiger Mischungen maximal 24 Stunden. Das erfindungsgemäße Siliconkautschukgranulat weißt jedoch eine Lagerbeständigkeit und damit einwandfreie Verarbeitbarkeit von mindestens 6 Monaten auf.

**Beispiel 1**

Herstellung des Additives

100 Teile eines Dimethylpolysiloxanes mit einer Viskosität von $8 \times 10^6$ mPa.s werden mit 13 Teilen Borsäure, 46 Teilen pyrogen in der Gasphase erzeugtem Silicumdioxid mit einer Oberfläche von 150 $gr/m^2$ sowie 5 Teilen Calciumstereat und 30 Teilen voll entsalztem Wasser in einem Kneter vermischt und 3 Std bei 150 °C unter Stickstoffatmosphäre geknetet, wobei das als Lösungsmittel für die Borsäure dienende Wasser abgezogen wird.

**Beispiel 2**

Herstellung des peroxidisch vernetzenden Siliconkautschuk

100 Teile eines durch Trimethylsiloxygruppen endblockierten Diorganopolysiloxans aus 99,93 Mol% Dimethylsiloxaneinheiten und 0,07 Mol% Vinylmethylsiloxaneinheiten mit einer Viskosität von $8 \times 10^6$ mPa.s bei 25°C werden in einem bei 150°C betriebenen Kneter zunächst mit 50 Teilen pyrogen in der Gasphase erzeugtem Siliciumdioxid mit einer Oberfläche von 200 m$^2$/g, dann mit 1 Teil durch Trimethylsiloxygruppen endblockierten Dimethylpolysiloxan mit einer Viskosität von 96 mPa.s bei 25°C, dann mit 7 Teilen eines in den endständigen Einheiten je eine Si-gebundene Hydroxylgruppe aufweisenden Dimethylpolysiloxans mit einer Viskosität von 40 mPa.s bei 25°C, dann erneut mit 1 Teil durch Trimethylsiloxygruppen endblockiertem Dimethylpolysiloxan mit einer Viskosität von 96 mPa.S bei 25 °C und schließlich mit 2,8 Teilen einer Paste aus gleichen Teilen Bis-(2,4-dichlorbenzoyl)-peroxid und eines durch Trimethylsiloxygruppen endblockierten Dimethylpolysiloxans mit einer Viskosität von 250 mPa.s bei 25 °C vermischt und mit 0,8 % des Additives nach Beispiel 1 versetzt und ohne Probleme zu einem voll rieselfähigen Granulat verarbeitet. Als Fertigungseinrichtung dafür dient ein Extruder mit einem am Spritzkopf aufgesetztem rotierendem Messer.

**Vergleichsbeispiel 1**

Beispiel 2 wird wiederholt, ohne daß das erfindungsgemäße Additiv zugegeben wird. Der erhaltene Siliconkautschuk kann nicht granuliert werden, sondern verschmiert lediglich Lochplatte und Messer.

**Beispiel 3**

Herstellung des additionsvernetzenden Siliconkautschuks:

Herstellung A-Komponente:

75 Teile eines durch Trimethylsiloxygruppen entblockierten Diorganopolysiloxan aus 99,7 Mol% Dimethylsiloxaneinheiten und 0,3 Mol% Vinylmethylsiloxaneinheiten mit einer Viskosität von $8 \times 10^6$ mPa.s bei 25 °C sowie 25 Teile eines durch Trimethylsiloxygruppen entblockierten Diorganopolysiloxans aus 99,4 Mol% Dimethylsiloxaneinheiten und 0,6 Mol% Vinylmethylsiloxaneinheiten mit einer Viskosität von $8 \times 10^6$ mPa.s bei 25 °C werden in einem bei 150 °C betriebenen Kneter mit 45 Teilen Pyrogen in der Gasphase erzeugtem Siliciumdioxid mit einer BET-Oberfläche von 300 m$^2$ pro/g und 7 Teilen eines in den endständigen Einheiten je eine Si-gebundene Hydroxylgruppe aufweisenden Dimethylpolysiloxan mit einer Viskosität von 40 mPa.s bei 25 °C vermischt und 2 Stunden lang geknetet.

Zu 100 Gew.-Teilen dieser Siliconbasismischung werden, nach abkühlen der Masse auf Raumtemperatur, 0,19 g eines Platinkatalysators, bestehend aus 97 Gew.-Teilen eines Polydimethylsiloxans und 3 Gew.-Teilen eines Platin-divinyltetramethyldisiloxan-Komplexes, und 0,07 Gew.-Teile Ethinylcyclohexanol als Inhibitor gegeben und in einem Kneter homogenisiert.

Herstellung der B-Komponente:

Es wird eine unter A-Komponente beschriebe Mischung hergestellt mit dem Unterschied, dass nach abkühlen der Masse auf Raumtemperatur anstelle des Platinkatalysators und Inhibitors zu 100 Gew.-Teilen dieser Silcionbasismischung 4 Gew.-Teile eines Polydimethylsiloxan-co-hydrogenmethylpolysiloxans und 0,03 Gew.-Teile Ethinylcyclohexanol als Inhibitor zugesetzt werden.

A- und B-Komponente werden je mit 0,8 % des Additives nach Beispiel 1 versetzt und in einem Kneter homogenisiert und ohne Probleme zu einem voll rieselfähigen Granulat verarbeitet. Als Fertigungseinrichtung dafür dient ein Extruder mit einem am Spritzkopf aufgesetztem rotierendem Messer.

**Vergleichsbeispiel 2**

Beispiel 3 wird wiederholt, ohne daß das erfindungsgemäße Additiv zugegeben wird. Der erhaltene Siliconkautschuk kann nicht granuliert werden, sondern verschmiert lediglich Lochplatte und Messer.

**Patentansprüche**

1.   Zusammensetzung enthalsend zumindest ein Polyorganosiloxan, Fettsäuresalz Borsäure, Fettsäuresalz und Wasser.

**2.** Zusammensetzung nach Anspruch 1 , **dadurch gekennzeichnet, daß** das Fettsäuresalz ein Stearat ist.

**3.** Verfahren zur Herstellung der Zusammensetzung nach Anspruch 1 oder 2, **dadurch gekennzeichnet, daß** die Komponenten Polyorganosiloxan, Borsäure Fettsäuresalz und Wasser vermischt werden.

**4.** Rieselfähiges Siliconkautschukgranulat enthaltend die Zusammensetzung nach Anspruch 1 oder 2 oder hergestellt nach Anspruch 3.

**5.** Siliconkautschukgranulat nach Anspruch 4, **dadurch gekennzeichnet, daß** die Zusammensetzung in einer Menge von 0,2 bis 3 Gew.% enthalten ist.

**6.** Verfahren zur Herstellung des Siliconkautschukgranulats nach Anspruch 4 oder 5, **dadurch gekennzeichnet, daß** die Komponenten vermischt werden und anschließend granuliert werden.

**Claims**

**1.** Composition comprising at least one polyorganosiloxane, boric acid, fatty acid salt and water.

**2.** Composition according to Claim 1, **characterized in that** the fatty acid salt is a stearate.

**3.** Process for preparing the composition according to Claim 1 or 2, **characterized in that** the components polyorganosiloxane, boric acid, fatty acid salt and water are mixed.

**4.** Free-flowing pelletized silicone rubber material comprising the composition according to Claim' 1 or 2 or prepared according to Claim 3.

**5.** Pelletized silicone rubber material according to Claim 4, comprising from 0.2 to 3% by weight of the composition.

**6.** Process for preparing the pelletized silicone rubber material according to Claim 4 or 5, **characterized in that** the components are mixed and then pelletized.

**Revendications**

**1.** Composition contenant au moins un polyorganosiloxane, de l'acide borique, un sel d'acide gras et de l'eau.

**2.** Composition selon la revendication 1, **caractérisée en ce que** le sel d'acide gras est un stéarate.

**3.** Procédé pour la préparation de la composition selon la revendication 1 ou 2, **caractérisé en ce que** les composants polyorganosiloxane, acide borique, sel d'acide gras et eau sont mélangés.

**4.** Produit granulé à base de caoutchouc silicone, apte à l'écoulement, contenant la composition selon la revendication 1 ou 2 ou préparé selon la revendication 3.

**5.** Produit granulé à base de caoutchouc silicone selon la revendication 4, **caractérisé en ce que** la composition est contenue en une quantité de 0,2 à 3 % en poids.

**6.** Procédé pour la préparation du produit granulé à base de caoutchouc silicone selon la revendication 4 ou 5, **caractérisé en ce que** les composants sont mélangés et sont ensuite granulés.